(19) Europäisches Patentamt
European Patent Office
Office européen des brevets

(11) EP 3 806 447 A1

(12) **EUROPEAN PATENT APPLICATION**
published in accordance with Art. 153(4) EPC

(43) Date of publication:
**14.04.2021 Bulletin 2021/15**

(21) Application number: **19818508.4**

(22) Date of filing: **07.05.2019**

(51) Int Cl.:
*H04N 5/232* (2006.01)     *G03B 7/091* (2021.01)
*G03B 15/00* (2021.01)     *H04N 5/235* (2006.01)

(86) International application number:
**PCT/JP2019/018270**

(87) International publication number:
**WO 2019/239744 (19.12.2019 Gazette 2019/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.06.2018  JP 2018111389**

(71) Applicant: **Panasonic Intellectual Property
Management Co., Ltd.
Osaka-shi, Osaka 540-6207 (JP)**

(72) Inventors:
• **MAENO, Kazuki**
  **Osaka-shi, Osaka 540-6207 (JP)**
• **OGURA, Yasunobu**
  **Osaka-shi, Osaka 540-6207 (JP)**
• **KAGAYA, Tomoyuki**
  **Osaka-shi, Osaka 540-6207 (JP)**

(74) Representative: **Eisenführ Speiser
Patentanwälte Rechtsanwälte PartGmbB
Postfach 10 60 78
28060 Bremen (DE)**

(54) **IMAGING CONTROL DEVICE, IMAGING CONTROL METHOD, AND PROGRAM**

(57)     To provide an imaging control device, an imaging control method, and a program for determining a group of parameters corresponding to an installation status of a camera. An imaging control device(1) determining a group of parameters related to a shooting operation of a camera(2), comprises: an input unit(10) inputting imaging data generated by the camera; and a control unit(20) selecting a group of parameters set in the camera from candidate groups of parameters based on the imaging data. The control unit(20)acquires, via the input unit, each imaging data generated by the camera to which each candidate group of parameters is set, extracts a plurality of extraction object images each including an extraction object, from the imaging data for each candidate group, calculates an evaluation value on image quality based on the plurality of extraction object images for each candidate group, and selects any one group of parameters from the candidate groups of parameters based on evaluation values on image quality.

Fig.1

EP 3 806 447 A1

**Description**

TECHNICAL FIELD

The present disclosure relates to an imaging control device, an imaging control method, and a program for determining a parameter related to a shooting operation of a camera.

BACKGROUND ART

Patent Document 1 discloses an imaging device using a contrast method for focusing. This imaging device uses different search conditions suitable for respective searches between when a combination of a subject image area and a partial image area of the same person is searched for and when it is determined again after detection of a combination of a subject image area and a partial image area whether the detected area includes an image searched for. While suppressing a detection failure of a person by searching for a combination of the subject image area and the partial image area, an area erroneously detected at the time of searching for the combination is excluded by re-determination so as to improve a detection rate of a person or a face. The improvement in the detection rate leads to stabilization of a focus searching area. This improves the stability of focus control when the contrast method is used for focusing.

Patent Document 2 discloses an imaging device imaging a monitored object. This imaging device has an automatic exposure control means changing values of operation parameters including an aperture value and at least one of a shutter speed and a gain value and thereby bring a luminance level of an output signal of an imaging element closer to a desired value. If the brightness of the monitored object decreases while the aperture value is set to a predetermined value near a small aperture end, the automatic exposure control means preferentially changes the aperture value when an abnormality monitoring mode is set as compared to when a normal monitoring mode is set. As a result, an abnormal state is photographed with high image quality and the durability is improved.

PRIOR ART DOCUMENT

PATENT DOCUMENT

Patent Document 1: Japanese Patent No. 5829679
Patent Document 2: Japanese Patent No. 4921204

SUMMARY

TECHNICAL PROBLEM

The present disclosure provides an imaging control device, an imaging control method, and a program for determining a parameter corresponding to an installation status of a camera.

SOLUTION TO PROBLEM

The imaging control device of the present disclosure is an imaging control device determining a group of parameters related to a shooting operation of a camera, including: an input unit inputting imaging data generated by the camera; and a control unit selecting a group of parameters set in the camera from candidate groups of parameters based on the imaging data, and the control unit acquires, via the input unit, each imaging data generated by the camera to which each candidate group of parameters is set, extracts a plurality of extraction object images each including an extraction object, from the imaging data for each candidate group, calculates an evaluation value on image quality based on the plurality of extraction object images for each candidate group, and selects any one group of parameters from the candidate groups of parameters based on evaluation values on image quality.

These general and specific aspects may be implemented by a system, a method, and a computer program, as well as a combination thereof.

ADVANTAGEOUS EFFECT OF INVENTION

According to the imaging control device, the imaging control method, and the program of the present disclosure, a group of parameters to be set in the camera is determined based on evaluation values on image quality calculated based on the imaging data of the camera. Therefore, the parameters corresponding to the installation status of the camera can be determined.

BRIEF DESCRIPTION OF DRAWINGS

[Fig.1] Fig. 1 is a block diagram showing a configuration of an imaging control device according to first and second embodiments.
[Fig.2] Fig. 2 is a flowchart showing determination of parameters in the first embodiment.
[Fig.3] Fig. 3 is a flow chart showing calculation of an evaluation value on image quality.
[Fig.4] Fig. 4 is a diagram for explaining a feature vector.
[Fig.5] Fig. 5 is a flow chart showing determination of parameters in the second embodiment.
[Fig.6] Fig. 6 is a flow chart showing generation of parameter vectors by genetic algorithm.
[Fig.7] Fig. 7 is a flowchart showing generation of parameter vectors of the next generation.
[Fig.8] Fig. 8 is a flowchart for explaining crossover.
[Fig.9] Fig. 9 is a flowchart for explaining mutation.
[Fig.10] Fig. 10 is a flowchart for explaining copying.

DETAILED DESCRIPTION

(Knowledge Underlying the Present Disclosure)

When a camera such as a surveillance camera is newly installed or an installation position is changed due to layout change, a group of parameters related to a shooting operation of the camera may be set to appropriate values corresponding to the installation status of the camera. For example, the installation status of the camera includes an installation position of the camera and the lighting condition of the surrounding environment.

The group of parameters related to the shooting operation of the camera includes multiple types of parameters for setting an exposure time, focus, compression quality, etc. However, it is difficult for humans to determine the optimum values of multiple types of parameters in consideration of the installation position of the camera, the lighting condition of the surrounding environment, etc. For example, if the exposure time is made longer to reduce noise in an image, blurring easily occurs due to a motion. If the aperture is opened large to reduce noise in an image, the depth of field becomes shallow and blurring easily occurs due to a distance. A trade-off relationship also exists between camera brightness and a tendency to blur. Therefore, it is difficult for humans to determine which parameter should be set to which value.

Furthermore, hundreds of surveillance cameras may be installed in facilities such as an airport or a shopping center or in a city. It takes time to manually determine the group of parameters for each of such a large number of surveillance cameras according to the installation position of the camera, the lighting condition of the surrounding environment, etc. Moreover, when the positions of the cameras once installed are changed due to a layout change, it is not easy to manually reset the group of parameters if the number of cameras is large.

The present disclosure provides (I) an imaging control device determining multiple types of parameters related to a shooting operation of a camera to appropriate values corresponding to the installation position of the camera, the lighting condition of the surrounding environment, etc.

Multiple surveillance cameras may be used to search for a particular person. Automatic face recognition using machine learning such as deep learning is recently performed in such surveillance cameras etc. It is difficult to determine optimal parameter values for the automatic face recognition based on human subjective evaluation. For example, a person determines that image quality is good if characteristics in a high frequency region remain. However, in the automatic face recognition, a frequency region at a certain level or higher is not used because of sensitivity to noise. Furthermore, whether a parameter is good or bad depends on an automatic face recognition algorithm used. However, it is difficult for humans to determine which of a blurred bright image and a sharp dark image is suitable for automatic face recognition.

In Patent Document 1, focus control is performed based on contrast of a region desired to be focused on in a captured image. However, if the shutter speed is increased to improve the contrast, the luminance level decreases. On the other hand, if the shutter speed is reduced to improve the luminance level, the contrast decreases due to a motion blur. Therefore, when only the contrast is used as an index, the luminance level is not taken into consideration, and face recognition may adversely be affected. Therefore, the contrast is not necessarily an index suitable for face recognition.

In Patent Document 2, brightness adjustment of a captured image is implemented by a method of bringing a luminance level closer to a desired value. However, the luminance level is not necessarily an appropriate index for face recognition. Additionally, how the desired value is set is not clearly defined. Therefore, the desired value suitable for face recognition is not set.

Therefore, it is conventionally difficult to determine multiple types of parameters related to a shooting operation of a camera to values suitable for face recognition.

The present disclosure provides (II) an imaging control device determining a group of parameters suitable for face recognition.

Embodiments will be described in terms of an imaging control device determining parameters having (I) appropriate values corresponding to an installation position of a camera, the lighting condition of the surrounding environment, etc. and (II) the values suitable for face recognition. Specifically, the imaging control device of the present disclosure calculates an evaluation value on image quality based on a feature of a face image from a moving image captured by a camera such as a surveillance camera and determines a group of parameters set in the camera based on the evaluation value on image quality. As a result, a group of parameters corresponding to the installation position of the camera, the lighting condition of the surrounding environment, etc. and suitable for face recognition can be set in the camera. Therefore, the performance of face recognition is improved.

(First Embodiment)

A first embodiment will now be described with reference to the drawings. In this embodiment, setting of a group of parameters of a camera suitable for face recognition using deep learning will be described.

## 1. Configuration

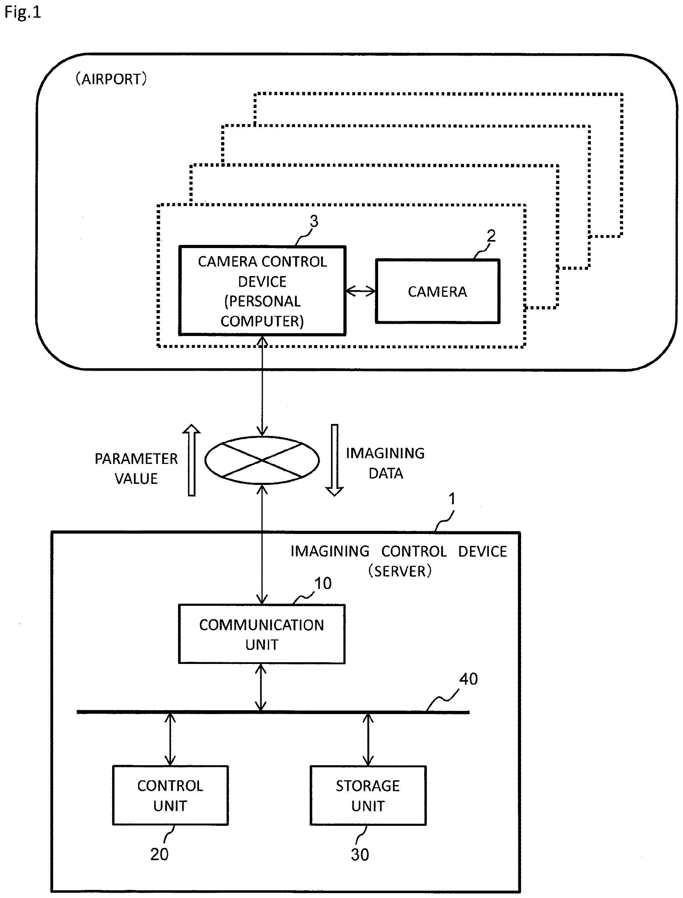

Fig. 1 shows an electrical configuration of an imaging control device according to the present disclosure. For example, an imaging control device 1 is a server, a camera 2 is a surveillance camera, and a camera control device 3 is a personal computer. The imaging control device 1 is, for example, a cloud server, and is connected to one or more camera control devices 3 via the Internet. In the example of Fig. 1, one camera 2 is connected to one camera control device 3. The imaging control device 1 determines respective groups of parameters of the multiple cameras 2 when the multiple cameras 2 are newly installed in an airport etc., for example.

The imaging control device 1 includes a communication unit 10, a control unit 20, a storage unit 30, and a bus 40.

The communication unit 10 includes a circuit communicating with an external device in conformity with a predetermined communication standard. Examples of the predetermined communication standard includes LAN, Wi-Fi (registered trademark), Bluetooth (registered trademark), USB, and HDMI (registered trademark).

The control unit 20 controls the operation of the imaging control device 1. The control unit 20 can be implemented by a semiconductor element etc. The control unit 20 is a microcomputer, a CPU, an MPU, a GPU, a DSP, an FPGA, or an ASIC, for example. The function of the control unit 20 may be constituted only by hardware or may be implemented by combining hardware and software. The control unit 20 implements a predetermined function by reading data and a program stored in the storage unit 30 and performing various arithmetic processes. The program executed by the control unit 20 may be provided from the communication unit 10 etc. or may be stored in a portable recording medium.

The control unit 20 determines a group of parameters related to the shooting operation of the camera 2 based on imaging data generated by the camera 2. The group of parameters of the camera 2 includes multiple types of parameters affecting image quality. For example, the group of parameters includes one or more of aperture value, gain, white balance, shutter speed, and focal length.

The storage unit 30 can be implemented by, for example, a hard disk (HDD), an SSD, a RAM, a DRAM, a ferroelectric memory, a flash memory, a magnetic disk, or a combination thereof.

The bus 40 is a signal line electrically connecting the communication unit 10, the control unit 20, and the storage unit 30.

The imaging control device 1 may further include a user interface allowing a user to input various operations. For example, the imaging control device 1 may include a keyboard, buttons, switches, and a combination thereof.

The camera 2 includes an image sensor such as a CCD image sensor, a CMOS image sensor, or an NMOS image sensor.

The camera control device 3 sets the camera 2 based on the group of parameters determined by the imaging control device 1.

## 2. Operation

### 2.1 Determination of Parameter Vectors

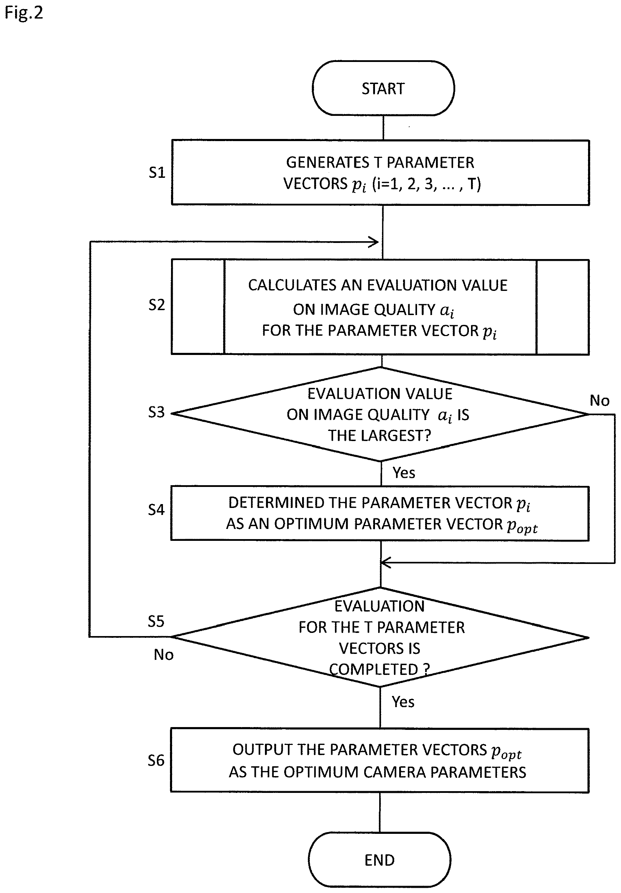

Fig. 2 is a flowchart showing an operation of determining parameter vectors by the control unit 20 of the imaging control device 1.

The control unit 20 generates T parameter vectors $p_i$ (i=1, 2,..., T), i.e., parameter vectors pi, $p_2$, $p_3$,..., $P_T$ (S1). The parameter vectors pi is a group of parameters including multiple parameters. For example, each of the parameter vectors pi includes M elements, which are parameters $p_{i,1}$, $p_{i,2}$, $p_{i,3}$...$P_{i,M}$. The parameters $p_{i,1}$, $p_{i,2}$, $p_{i,3}$...$P_{i,M}$ correspond to aperture value, gain, white balance, shutter speed, focal length, etc. The T parameter vectors pi form T patterns of the parameter vectors pi. Specifically, one or more of the elements included in the parameter vector pi have different values from the elements of the same type included in the other parameter vectors pi. For example, at least one of aperture value, gain, white balance, shutter speed, and focal length is different. Any method is used for generating the T parameter vectors pi. For example, T parameter vectors $p_i$ may be generated by combining all settable values. The T parameter vectors pi generated at step S1 is a candidate group of parameters which will be finally set in the camera 2.

The control unit 20 calculates an evaluation value on image quality $a_i$ for the parameter vector pi (S2). The evaluation value on image quality ai in this embodiment is related to image recognition and specifically corresponds to a degree of match for face recognition.

The control unit 20 determines whether the calculated evaluation value on image quality ai is the largest of the already calculated evaluation values on image quality (S3). If the evaluation value on image quality ai is the largest, the parameter vector pi is determined as an optimum parameter vector $p_{opt}$ (S4). If the evaluation value on image quality ai is not the largest, step S4 is skipped.

The control unit 20 determines whether the evaluation based on the evaluation value on image quality ai is completed for all the T parameter vectors pi (S5). If any of the parameter vectors $p_i$ is not evaluated, the process returns to step S2.

When the evaluation is completed for the T parameter vectors $p_i$, the parameter vectors $p_{opt}$ is output to the camera control device 3 as the optimum camera parameters (S6).

### 2.2 Calculation of Evaluation Value on Image Quality

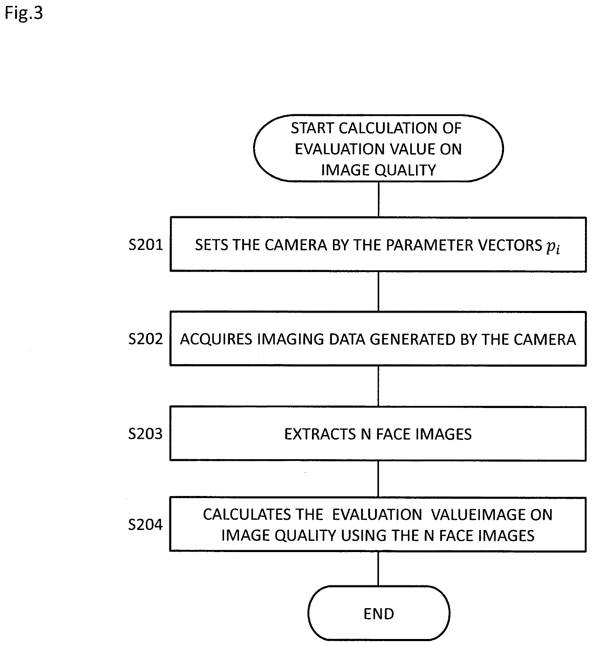

Fig. 3 shows details of the calculation (S2) of the evaluation value on image quality. The control unit 20 sets various parameters of the camera 2 by outputting the parameter vectors pi to the camera control device 3 (S201).

The control unit 20 acquires imaging data generated through shooting by the camera 2 set to the value indicated by the parameter vector pi (S202). The imaging data is, for example, a moving image including one or more images. The control unit 20 extracts N face images from the imaging data (S203). Any method is used for extracting the face image.

The control unit 20 calculates the evaluation value on image quality ai using the N face images (S204). For example, the evaluation value on image quality ai is calculated based on features of N face images. The control unit 20 records the parameter vector pi and the evaluation value on image quality ai correlated with each other in the storage unit 30.

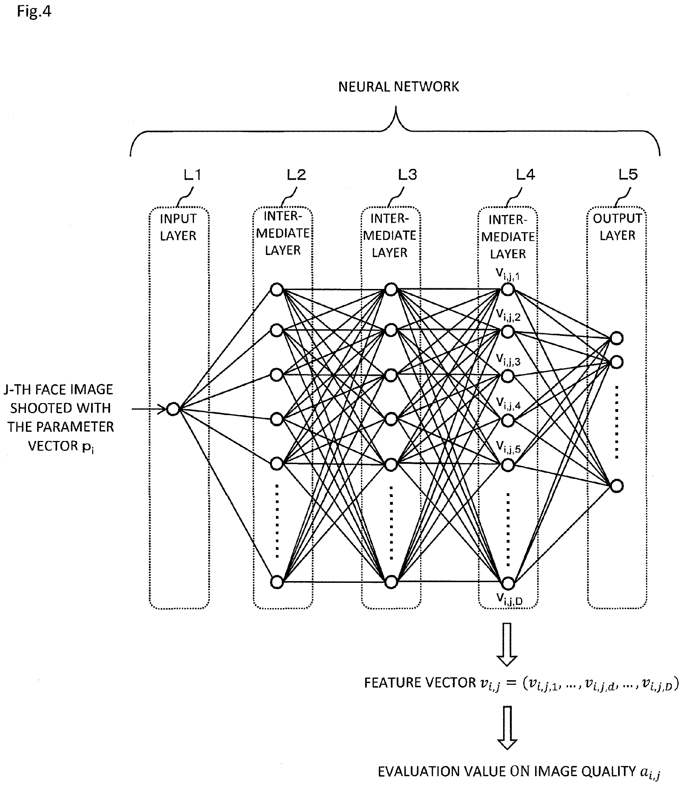

A specific example of calculation of the evaluation value on image quality ai (S204) will be described with reference to Fig. 4. Fig. 4 shows an example of calculation of a feature vector vi,j, which is an example of the feature of the face image. In this embodiment, the feature vector vi,j (j=1, 2,..., N) is generated using a neural network having learned a face image. For example, the neural network associates learning data indicative of a large number of face images with labels indicative of who the face images are for the learning in advance. The learned neural network is stored in the storage unit 30. The neural network has a multi-layer structure used for deep learning. For example, the neural network includes an input layer L1, intermediate layers L2, L3, L4, and an output layer L5. The number of the intermediate layers is not limited to three. The intermediate layer includes one or more layers. The neural network outputs, for example, a vector indicative of who the face image input to the input layer L1 is from the output layer L5.

The control unit 20 sequentially inputs first to N-th face images extracted at step S203 to the input layer L1 of the neural network. In this embodiment, for example, for a j-th (j=1, 2,..., N) face image, the feature vectors $v_{i,j}=(v_{i,j,1}, v_{i,j,2}, v_{i,j,3},..., v_{i,j,D})$ are generated from node values $v_{i,j,1}, v_{i,j,2}, v_{i,j,3},..., v_{i,j,D}$ of the intermediate layer L4 closest to the output layer L5.

The control unit 20 calculates the evaluation value on image quality ai,j for each face image from the respective feature vectors vi,j (j=1, 2,..., N) of N face images. Specifically, the control unit 20 calculates an L2 norm value $l_{i,j}$ of the feature vector $v_{i,j}$ for each of the N evaluation values on image quality ai,j by Eq. (1). A relationship exists between the L2 norm and image quality (see, e.g., Rajeev Ranjan, Carlos D. Castillo, Rama Chellappa, "L2-constrained Softmax Loss for Discriminative Face Verification"). Therefore, in this embodiment, the value $l_{i,j}$ of the L2 norm is used as the evaluation value on image quality ai,j for each of the face images.

[Math. 1]

$$a_{i,j} = l_{i,j} = \sqrt{\sum_{d=1}^{D} v_{i,j,d}^2} \quad \ldots (1)$$

The control unit 20 calculates an average value of the evaluation values on image quality ai,j of the N face images as the evaluation value on image quality ai of the parameter vector pi as shown in Eq. (2).

[Math. 2]

$$a_i = \frac{1}{N}\sum_{j=1}^{N} a_{i,j} \quad \ldots (2)$$

3. Effects and Supplements

The imaging control device 1 determines a group of parameters related to the shooting operation of the camera 2. The imaging control device 1 includes the communication unit 10 inputting imaging data generated by the camera 2, and the control unit 20 selecting a group of parameters to be set in the camera from multiple candidate groups of parameters based on the imaging data. The control unit 20 acquires via the input unit the imaging data generated by the camera to which each candidate group of parameters is set, extracts multiple face images from the imaging data for each of the candidate groups, calculates an evaluation value on image quality based on multiple face images for each of the candidate groups, and selects one of the groups of parameters from multiple candidate groups of parameters based on the evaluation values on image quality.

In this way, by determining the group of parameters based on the imaged data of the camera 2, parameter values corresponding to the installation position of the camera 2 and the lighting condition of the surrounding environment can be selected. Therefore, for example, when hundreds of surveillance cameras may be installed in a facility such as an airport or a shopping center, this eliminates the need for a person to determine the parameter values of each camera in accordance with the installation position of the camera 2 and the lighting condition of the surrounding environment, so that a work cost due to parameter adjustment can be reduced.

Furthermore, according to this embodiment, the group of parameters to be set in the camera 2 is determined based on the evaluation value on image quality indicative of a degree of match for face recognition calculated from the imaging data of the camera 2. Therefore, the performance of face recognition is improved.

The control unit 20 selects the group of parameters providing the largest evaluation value on image quality among the evaluation values on image quality of the respective candidate groups of parameters. As a result, the optimum group of parameters may be selected in accordance with the installation position of the camera 2 and the lighting condition of the surrounding environment. Additionally, the optimum group of parameters for face recognition may be selected. For example, when a face is erroneously detected, the evaluation value on image quality becomes low. This can prevent selection of a group of parameters causing an erroneous face detection.

The control unit 20 calculates the evaluation value on image quality by calculating the L2 norm of the features of the multiple face images. A relationship exists between the L2 norm of the features of the face images and the image quality. Therefore, by selecting a group of parameters based on the evaluation value on image quality calculated from the L2 norm of the features of the face images, a group of parameters corresponding to the installation position of the camera 2 and the lighting condition of the surrounding environment and suitable for face recognition is selected.

(Second Embodiment)

In the first embodiment, any method is used for generating T parameter vectors (S1). In this embodiment, a genetic algorithm (GA) is used to generate T parameter vectors.

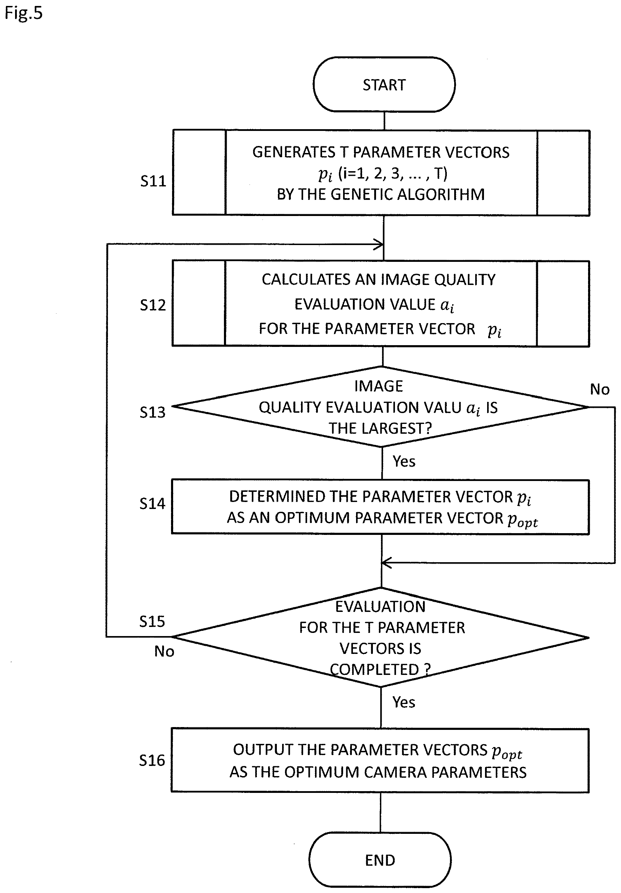

Fig. 5 is a flowchart showing an operation of determining parameter vectors by the control unit 20 of the imaging control device 1 in the second embodiment. The control unit 20 generates T parameter vectors $p_i$ (i=1, 2, 3,..., T) by the genetic algorithm (S11). Fig. 5 is the same as Fig. 2 of the first embodiment except that the parameter vector $p_i$ is generated by the genetic algorithm. Specifically, steps S12 to S16 of Fig. 5 are the same as steps S2 to S6 of Fig. 2.

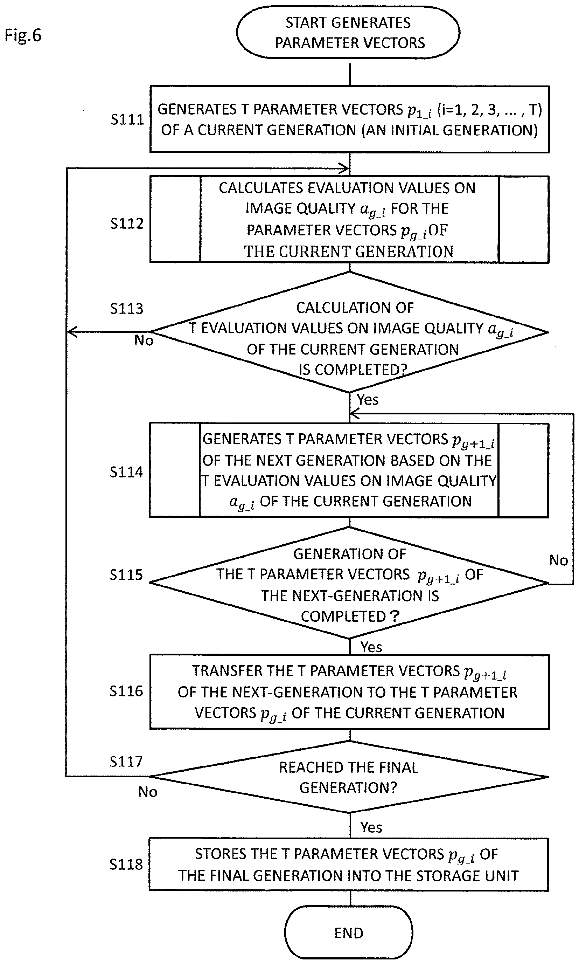

Fig. 6 shows details of the generation of the T parameter vectors $p_i$ (i=1, 2, 3,..., T) (S11) using the genetic algorithm. The control unit 20 generates T parameter vectors $p_{1\_i}$ (i=1, 2, 3,..., T) of an initial generation that is a first generation of a current generation, i.e., parameter vectors $p_{1\_1}$, $p_{1\_2}$, $p_{1\_3}$,..., $p_{1\_T}$ (S111).

The control unit 20 calculates evaluation values on image quality $a_{g\_i}$ for the T parameter vectors $p_{g\_i}$ of the current generation (S112). Immediately after step S111, the evaluation values on image quality $a_{1\_i}$ is calculated for the T parameter vectors $p_{1\_i}$ (g=1) of the initial generation (S112). The calculation of the evaluation values on image quality at step S112 is performed by the same method as step S2 of Fig. 2. Specifically, step S112 corresponds to steps S201 to S204 shown in Fig. 3 of the first embodiment.

The control unit 20 determines whether the calculation of the evaluation values on image quality $a_{g\_i}$ is completed for the T parameter vectors $p_{g\_i}$ of the current generation (S113). If the calculation of the evaluation values on image quality $a_{g\_i}$ for the T parameter vectors $p_{g\_i}$ of the current generation is not completed, the process returns to step S112.

When the calculation of the evaluation values on image quality $a_{g\_i}$ for the T parameter vectors $p_{g\_i}$ of the current generation is completed, the control unit 20 generates T parameter vectors $p_{g+1\_i}$ (i=1, 2,..., T) of the next generation based on the T evaluation values on image quality $a_{g\_i}$ of the current generation (S114). The control unit 20 determines whether the generation of the T parameter vectors $p_{g+1\_i}$ of the next-generation is completed (S115) . Step S114 is repeated until the number of the next-generation parameter vector $p_{g+1\_i}$ reaches T.

When the generation of the T parameter vectors $p_{g+1\_i}$ of the next-generation is completed, a value of each element of the next-generation T parameter vectors $p_{g+1\_i}$ is transferred to the T parameter vectors $p_{g\_i}$ of the current generation (S116).

The control unit 20 determines whether the current generation has reached the final generation (S117). Steps S112 to S117 are repeated until the final generation is reached.

When the current generation reaches the final generation, the control unit 20 stores the T parameter vectors $p_{g\_i}$ of the final generation obtained at step S116 into the storage unit 30 (S118). As a result, T parameter vectors providing the highest evaluation value on image quality in the current generation are finally obtained as the solution of the genetic algorithm.

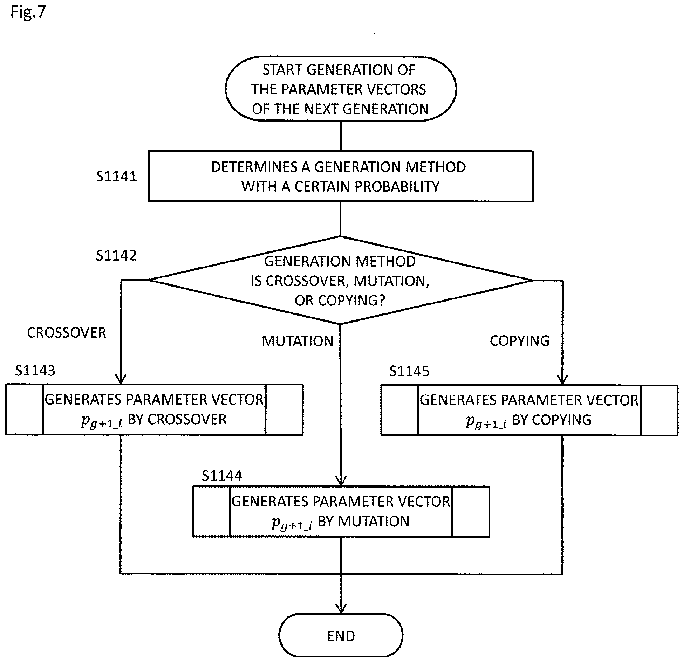

Fig. 7 shows details of generation of the T parameter vectors $p_{g+1\_i}$ of the next generation (S114) . The control unit 20 determines a generation method of the parameter vector $p_{g+1\_i}$ from crossover, mutation, and copying with a certain probability (S1141).

The control unit 20 determines whether the determined generation method is crossover, mutation, or copying (S1142), and the control unit 20 generates one parameter vector $p_{g+1\_i}$ by one of crossover (S1143), mutation (S1144), and copying (S1145) depending on a result of determination.

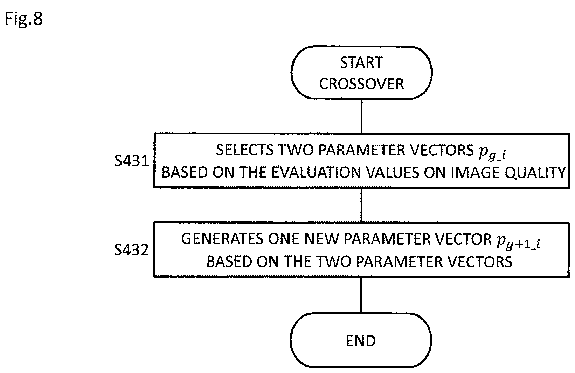

Fig. 8 is a flowchart showing details of the crossover (S1143). The control unit 20 selects two parameter vectors $p_{g\_i}$ based on the T evaluation values on image quality $a_{g\_i}$ calculated at step S112 (S431).

The parameter vectors $p_{g\_i}$ are selected by roulette selection, for example. Specifically, based on the evaluation values on image quality $a_{g\_i}$, the probability $r_i$ of selecting the parameter vector $p_{g\_i}$ is calculated by Eq. (3). The parameter vectors $p_{g\_i}$ are selected based on a probability $r_i$.

[Math. 3]

$$r_i = {a_{g\_i}} \Big/ {\sum_{k=1}^{T} a_{g\_k}} \qquad \dots (3)$$

The parameter vectors $p_{g\_i}$ may be selected by ranking selection. For example, the probabilities of ranks are determined in advance, such as a probability $r_i$ for a first place, a probability $r_2$ for a second place, and a probability $r_3$ for a third place. The T parameter vectors $p_{g\_i}$

are ranked based on the T evaluation values on image quality $a_{g\_i}$, and the parameter vectors $p_{g\_i}$ are selected based on the probability corresponding to the ranking.

The control unit 20 generates one new parameter vector $p_{g+1\_i}$ based on the two parameter vectors $p_{g\_i}$ (S432). For example, the elements of the two parameter vectors $p_{g\_i}$ are independently replaced with a probability of 1/2 to generate the parameter vector $p_{g+1\_i}$.

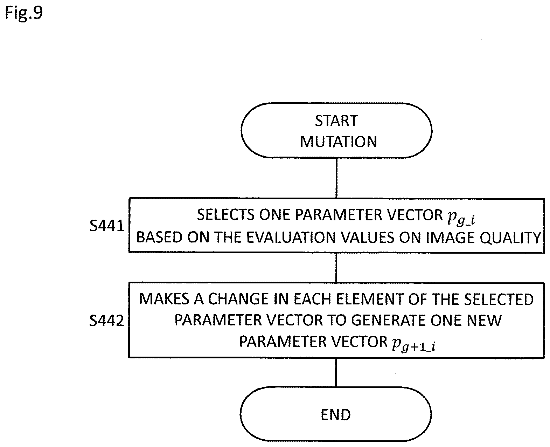

Fig. 9 is a flowchart showing details of the mutation (S1144). The control unit 20 selects one parameter vector $p_{g\_i}$ based on the T evaluation values on image quality $a_{g\_i}$ calculated at step S112 (S441). The parameter vector $p_{g\_i}$ is selected by the roulette selection or the ranking selection described above, for example. The control unit 20 makes a change in each element of the selected parameter vector $p_{g\_i}$ to generate one new parameter vector $p_{g+1\_i}$ (S442). For example, each element of the parameter vector $p_{g\_i}$ is randomly changed. Specifically, for example, each element of the parameter vector $p_{g\_i}$ is independently replaced with a random number or a value prepared in advance with a probability of 0.1 % to generate the parameter vector $p_{g+1\_i}$.

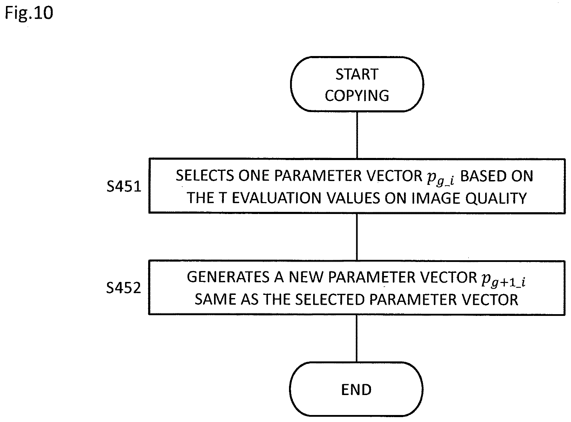

Fig. 10 is a flowchart showing details of copying (S1145). The control unit 20 selects one parameter vector $p_{g\_i}$ based on the T evaluation values on image quality $a_{g\_i}$ calculated at step S112 (S451). The parameter vector $p_{g\_i}$ is selected by the roulette selection or the ranking selection described above, for example. The control unit 20 generates a new parameter vector $p_{g+1\_i}$ that is the same as the selected parameter vector $p_{g\_i}$ (S452).

As a result, the T parameter vectors $p_i$, $p_2$, $p_3$,..., $P_T$ generated at step S11 are parameter vectors providing high evaluation values on image quality. Therefore, by selecting one of the parameter vectors at steps S12 to S15, a parameter vector providing a higher evaluation value on image quality can be selected.

(Other Embodiments)

As described above, the first and second embodiments have been described as exemplification of the techniques disclosed in the present application. However, the techniques in the present disclosure are not limited thereto and are also applicable to embodiments with modifications, replacements, additions, omissions, etc. made as appropriate. Therefore, other embodiments will hereinafter be exemplified.

In the embodiments, in the calculation of the evaluation value on image quality (S204), the L2 norm of the feature vector is used as an example of determining a parameter suitable for face recognition using deep learning. However, the method of calculating the evaluation value on image quality is not limited to the embodiments. For example, the evaluation value on image quality may be calculated by a function using a feature vector as an input value. For example, the method of calculating the evaluation value on image quality may be changed depending on a technique of face recognition. A technique of face recognition using a Gabor filter is known (see "Statistical Method for Face Detection/Face Recognition", Takio Kurita, Neuroscience Research Institute, National Institute of Advanced Industrial Science and Technology). In this case, the evaluation value on image quality may be calculated based on a Gabor feature. The Gabor feature is a feature that can be calculated by using a Gabor filter and that is based on a specific frequency component in a specific direction. It is known that this Gabor feature is affected by noise (see, e.g., "Recognition of Cracks in Concrete Structures Using Gabor Function", 22nd Fuzzy System Symposium, Sapporo, September 6-8, 2006). It is known that the Gabor feature is affected by blurring (see "Research on Blurred Region Detection Using Gabor Filter", the 22th Symposium on Sensing via Image Information, Yokohama, June 2015). Therefore, a correlation probably exists between the evaluation value on image quality based on the Gabor feature of the face image and the performance of face recognition. When the evaluation value on image quality based on the Gabor feature is calculated, at step S204, the sum of the elements corresponding to a specific frequency among the feature vectors $v_{i,j}=(v_{i,j,1}, v_{i,j,2}, v_{i,j,3},..., v_{i,j,D})$ of the j-th (1,2...N) face image is used as the evaluation value on image quality $a_{i,j}$ of the j-th face image. The evaluation value on image quality $a_i$ of the parameter vector $p_i$ is calculated by Eq. (2) based on the evaluation values on image quality $a_{i,j}$ of N face images.

In the embodiments, the one camera control device 3 is connected to the one camera 2; however, the multiple cameras 2 may be connected to the one camera control device 3. The number of the camera control devices 3 connected to the imaging control device 1 may be one or more.

In the example described in the embodiments, the imaging control device 1 such as a server determines the parameters, and the camera control device 3 such as a personal computer sets the parameters in the camera 2; however, the functions of the imaging control device 1 and the camera control device 3 may be performed by one device.

In the embodiments, the imaging control device 1 generates the T parameter vectors $p_i$ (S1 and S11); however, a person may generate the T parameter vectors $p_i$.

In the embodiments, the camera control device 3 sets the camera 2 based on the parameter vectors $p_i$ received from the imaging control device 1. However, a person may set some or all of the parameters of the camera 2.

In the example described in the embodiments, a group of parameters suitable for face recognition is determined; however, the determined group of parameters may not be suitable for face recognition. The group of parameters corresponding to the installation position of the camera 2, the intended purpose of imaging data, etc. may be determined. In this case, the image extracted at step S203 is not limited to the face image. The feature vector is not limited to the vector indicative of the feature of the face image. The image to be extracted and the feature may be changed depending on an object to be automatically recognized. For example, when a group of parameters suitable for automatic recognition of an automobile, the image to be extracted is an automobile image, and a neural network having learned automobile images may be used to generate a feature vector indicative of features of an automobile.

(Overview of Embodiments)

(1) The imaging control device of the present disclosure is an imaging control device determining a group of parameters related to a shooting operation of a camera, including: an input unit inputting imaging data generated by the camera; and a control unit selecting a group of parameters to be set in the camera from candidate groups of parameters based on the imaging data. The control unit acquires, via the input unit, the imaging data generated by the camera to which each candidate group of parameters is set, extracts a plurality of extraction object images each including an extraction object, from the imaging data for each of the candidates, calculates an evaluation value on image quality based on the plurality of extraction object images for each of the candidate groups, and selects any one group of parameters from the candidate groups of parameters based on the evaluation values on image quality.
In this way, by determining the group of parameters based on the imaged data of the camera 2, parameter values corresponding to the installation position of the camera 2 and the lighting condition of the surrounding environment can be selected. Additionally, since this eliminates the need for a person to adjust the parameter values, a work cost can be reduced.
(2) In the imaging control device of (1), the control unit may select a group of parameters providing the largest evaluation value on image quality among the evaluation values on image quality of the respective candidate groups.
As a result, the group of parameters more suitable for the installation position of the camera 2 and the lighting condition of the surrounding environment can be selected.
(3) In the imaging control device of (1) or (2), the extraction object may be a human face, and the evaluation value on image quality may correspond to a degree of match for face recognition.
As a result, a group of parameters suitable for face recognition is selected, so that performance of face recognition is improved.
(4) In the imaging control device of (1) to (3), the control unit may generate the candidate groups of parameters by using a genetic algorithm.

As a result, a better group of parameters can be selected from the candidate groups of parameters providing high evaluation values on image quality.
(5) In the imaging control device of (1) to (4), the control unit may calculate the evaluation value on image quality by calculating an L2 norm of features of the plurality of extraction object images.
(6) In the imaging control device of (1) to (4), the control unit may calculate the evaluation value on image quality by calculating Gabor features of the plurality of extraction object images.
(7) In the imaging control device of (1) to (6), the group of parameters may include at least two of aperture value, gain, white balance, shutter speed, and focal length.
(8) The imaging control method of determining a group of parameters related to a shooting operation of a camera, the method comprising the steps of: by use of an processing unit, acquiring, via an input unit, imaging data generated by the camera to which each candidate group of parameters is set; extracting a plurality of extraction object images each including an extraction object, from the imaging data for each candidate group; calculating an evaluation value on image quality based on the plurality of extraction object images for each of the candidates; and selecting the group of parameters to be set in the camera from the candidate groups of parameters based on the evaluation values on image quality.

The imaging control device and the imaging control method according to all claims of the present disclosure are implemented by cooperation etc. with hardware resources, for example, a processor, a memory, and a program.

INDUSTRIAL APPLICABILITY

The imaging control device of the present disclosure is useful for setting parameters of a surveillance camera, for example.

EXPLANATIONS OF LETTERS OR NUMERALS

| 1 | imaging control device |
|---|---|
| 2 | camera |
| 3 | camera control device |
| 10 | communication unit |
| 20 | control unit |
| 30 | storage unit |

Claims

1. An imaging control device determining a group of parameters related to a shooting operation of a camera, comprising:

> an input unit inputting imaging data generated by the camera; and
> a control unit selecting a group of parameters set in the camera from candidate groups of parameters based on the imaging data, wherein the control unit acquires, via the input unit, each imaging data generated by the camera to which each candidate group of parameters is set, extracts a plurality of extraction object images each including an extraction object, from the imaging data for each candidate group, calculates an evaluation value on image quality based on the plurality of extraction object images for each candidate group, and selects any one group of parameters from the candidate groups of parameters based on evaluation values on image quality.

2. The imaging control device according to claim 1, wherein
the control unit selects the group of parameters providing the largest evaluation value on image quality among the evaluation values on image quality of the respective candidate groups.

3. The imaging control device according to claim 1 or 2, wherein the extraction object is a human face, and wherein the evaluation values on image quality correspond to a degree of match of face recognition.

4. The imaging control device according to any one of claims 1 to 3, wherein
the control unit generates the candidate groups of parameters by using a genetic algorithm.

5. The imaging control device according to any one of claims 1 to 4, wherein the control unit calculates the evaluation value on image quality by calculating an L2 norm of features of the plurality of extraction object images.

6. The imaging control device according to any one of claims 1 to 4, wherein the control unit calculates the evaluation value on image quality by calculating Gabor features of the plurality of extraction object images.

7. The imaging control device according to any one of claims 1 to 6, wherein the group of parameters includes at least two of aperture value, gain, white balance, shutter speed, and focal length.

8. An imaging control method of determining a group of parameters related to a shooting operation of a camera, the method comprising the steps of:

by use of an processing unit,
acquiring, via an input unit, imaging data generated by the camera to which each candidate group of parameters is set;
extracting a plurality of extraction object images each including an extraction object, from the imaging data for each candidate group;
calculating an evaluation value on image quality based on the plurality of extraction object images for each candidate group; and
selecting the group of parameters to be set in the camera from the candidate groups of parameters based on the evaluation values on image quality.

9. A program that causes a computer to execute the imaging control method according to claim 8.

Fig.1

(AIRPORT)

CAMERA CONTROL
DEVICE
(PERSONAL
COMPUTER)    3

←→    CAMERA    2

PARAMETER
VALUE

IMAGINING
DATA

IMAGINING CONTROL DEVICE
(SERVER)    1

COMMUNICATION
UNIT    10

40

CONTROL
UNIT    20

STORAGE
UNIT    30

Fig.2

```
                    ┌─────────────┐
                    │    START    │
                    └─────────────┘
                           │
         ┌─────────────────────────────────────────────┐
    S1   │         GENERATES T PARAMETER                │
         │      VECTORS $p_i$ (i=1, 2, 3, ... , T)      │
         └─────────────────────────────────────────────┘
                           │
         ┌─────────────────────────────────────────────┐
    S2   │      CALCULATES AN EVALUATION VALUE          │
         │        ON IMAGE QUALITY $a_i$                │
         │      FOR THE PARAMETER VECTOR $p_i$          │
         └─────────────────────────────────────────────┘
                           │
              ◇ EVALUATION VALUE ◇
    S3        ON IMAGE QUALITY $a_i$ IS      ──── No ──┐
              THE LARGEST?                             │
                    │ Yes                              │
         ┌─────────────────────────────────────────┐  │
    S4   │ DETERMINED THE PARAMETER VECTOR $p_i$    │  │
         │ AS AN OPTIMUM PARAMETER VECTOR $p_{opt}$ │  │
         └─────────────────────────────────────────┘  │
                    │  ◄───────────────────────────────┘
              ◇ EVALUATION ◇
    S5        FOR THE T PARAMETER
    No        VECTORS IS
              COMPLETED ?
                    │ Yes
         ┌─────────────────────────────────────────┐
    S6   │ OUTPUT THE PARAMETER VECTORS $p_{opt}$   │
         │ AS THE OPTIMUM CAMERA PARAMETERS         │
         └─────────────────────────────────────────┘
                           │
                    ┌─────────────┐
                    │     END     │
                    └─────────────┘
```

Fig.3

```
          ╭──────────────────────────╮
          │   START CALCULATION OF   │
          │   EVALUATION VALUE ON    │
          │     IMAGE QUALITY        │
          ╰──────────────────────────╯
                        │
  ┌──────┬────────────────────────────────────────────┐
  │ S201 │  SETS THE CAMERA BY THE PARAMETER VECTORS $p_i$ │
  └──────┴────────────────────────────────────────────┘
                        │
  ┌──────┬────────────────────────────────────────────┐
  │ S202 │  ACQUIRES IMAGING DATA GENERATED BY THE CAMERA │
  └──────┴────────────────────────────────────────────┘
                        │
  ┌──────┬────────────────────────────────────────────┐
  │ S203 │           EXTRACTS N FACE IMAGES            │
  └──────┴────────────────────────────────────────────┘
                        │
  ┌──────┬────────────────────────────────────────────┐
  │ S204 │  CALCULATES THE EVALUATION VALUEIMAGE ON    │
  │      │  IMAGE QUALITY USING THE N FACE IMAGES      │
  └──────┴────────────────────────────────────────────┘
                        │
               ╭─────────────────╮
               │       END       │
               ╰─────────────────╯
```

Fig.4

FEATURE VECTOR $v_{i,j} = (v_{i,j,1}, \ldots, v_{i,j,d}, \ldots, v_{i,j,D})$

EVALUATION VALUE ON IMAGE QUALITY $a_{i,j}$

Fig.5

```
                    ┌─────────────┐
                    │    START    │
                    └──────┬──────┘
                           │
      ┌────┬───────────────┴───────────────┬────┐
 S11  │    │  GENERATES T PARAMETER VECTORS │    │
      │    │      $p_i$ (i=1, 2, 3, ... , T) │    │
      │    │     BY THE GENETIC ALGORITHM   │    │
      └────┴───────────────┬───────────────┴────┘
                           │
      ┌────┬───────────────┴───────────────┬────┐
 S12  │    │  CALCULATES AN IMAGE QUALITY   │    │
      │    │     EVALUATION VALUE $a_i$      │    │
      │    │ FOR THE PARAMETER VECTOR $p_i$  │    │
      └────┴───────────────┬───────────────┴────┘
```

S11 · GENERATES T PARAMETER VECTORS $p_i$ (i=1, 2, 3, ... , T) BY THE GENETIC ALGORITHM

S12 · CALCULATES AN IMAGE QUALITY EVALUATION VALUE $a_i$ FOR THE PARAMETER VECTOR $p_i$

S13 · IMAGE QUALITY EVALUATION VALU $a_i$ IS THE LARGEST?  —  No

Yes

S14 · DETERMINED THE PARAMETER VECTOR $p_i$ AS AN OPTIMUM PARAMETER VECTOR $p_{opt}$

S15 · EVALUATION FOR THE T PARAMETER VECTORS IS COMPLETED ?  —  No

Yes

S16 · OUTPUT THE PARAMETER VECTORS $p_{opt}$ AS THE OPTIMUM CAMERA PARAMETERS

END

Fig.6

$$\text{START GENERATES PARAMETER VECTORS}$$

S111 | GENERATES T PARAMETER VECTORS $p_{1\_i}$ (i=1, 2, 3, ... , T) OF A CURRENT GENERATION (AN INITIAL GENERATION)

S112 | CALCULATES EVALUATION VALUES ON IMAGE QUALITY $a_{g\_i}$ FOR THE PARAMETER VECTORS $p_{g\_i}$ OF THE CURRENT GENERATION

S113 | CALCULATION OF T EVALUATION VALUES ON IMAGE QUALITY $a_{g\_i}$ OF THE CURRENT GENERATION IS COMPLETED?

No

Yes

S114 | GENERATES T PARAMETER VECTORS $p_{g+1\_i}$ OF THE NEXT GENERATION BASED ON THE T EVALUATION VALUES ON IMAGE QUALITY $a_{g\_i}$ OF THE CURRENT GENERATION

S115 | GENERATION OF THE T PARAMETER VECTORS $p_{g+1\_i}$ OF THE NEXT-GENERATION IS COMPLETED ?

No

Yes

S116 | TRANSFER THE T PARAMETER VECTORS $p_{g+1\_i}$ OF THE NEXT-GENERATION TO THE T PARAMETER VECTORS $p_{g\_i}$ OF THE CURRENT GENERATION

S117 | REACHED THE FINAL GENERATION?

No

Yes

S118 | STORES THE T PARAMETER VECTORS $p_{g\_i}$ OF THE FINAL GENERATION INTO THE STORAGE UNIT

END

Fig.7

```
                    ┌─────────────────────────┐
                    │   START GENERATION OF    │
                    │  THE PARAMETER VECTORS   │
                    │  OF THE NEXT GENERATION  │
                    └─────────────────────────┘
                                 │
S1141          ┌─────────────────────────────────────┐
               │   DETERMINES A GENERATION METHOD     │
               │     WITH A CERTAIN PROBABILITY       │
               └─────────────────────────────────────┘
                                 │
S1142                    ╱─────────────────╲
                       ╱  GENERATION METHOD  ╲
                     ╱  IS CROSSOVER, MUTATION, ╲
                      ╲     OR COPYING?        ╱
                        ╲─────────────────────╱
   CROSSOVER                  MUTATION              COPYING
```

S1143

GENERATES PARAMETER VECTOR $p_{g+1\_i}$ BY CROSSOVER

S1145

GENERATES PARAMETER VECTOR $p_{g+1\_i}$ BY COPYING

S1144

GENERATES PARAMETER VECTOR $p_{g+1\_i}$ BY MUTATION

END

Fig.8

$$\begin{array}{c} \text{START} \\ \text{CROSSOVER} \end{array}$$

S431 | SELECTS TWO PARAMETER VECTORS $p_{g\_i}$ BASED ON THE EVALUATION VALUES ON IMAGE QUALITY

S432 | GENERATES ONE NEW PARAMETER VECTOR $p_{g+1\_i}$ BASED ON THE TWO PARAMETER VECTORS

END

Fig.9

```
        ╭─────────────────────╮
        │        START        │
        │      MUTATION       │
        ╰─────────────────────╯
                  │
   ┌──────────────────────────────────────────┐
S441│   SELECTS ONE PARAMETER VECTOR $p_{g\_i}$   │
   │ BASED ON THE EVALUATION VALUES ON IMAGE QUALITY │
   └──────────────────────────────────────────┘
                  │
   ┌──────────────────────────────────────────┐
   │ MAKES A CHANGE IN EACH ELEMENT OF THE SELECTED │
S442│   PARAMETER VECTOR TO GENERATE ONE NEW    │
   │      PARAMETER VECTOR $p_{g+1\_i}$          │
   └──────────────────────────────────────────┘
                  │
        ╭─────────────────────╮
        │         END         │
        ╰─────────────────────╯
```

Fig.10

START
COPYING

S451 | SELECTS ONE PARAMETER VECTOR $p_{g\_i}$ BASED ON THE T EVALUATION VALUES ON IMAGE QUALITY

S452 | GENERATES A NEW PARAMETER VECTOR $p_{g+1\_i}$ SAME AS THE SELECTED PARAMETER VECTOR

END

## INTERNATIONAL SEARCH REPORT

| International application No. |
|---|
| PCT/JP2019/018270 |

**A. CLASSIFICATION OF SUBJECT MATTER**
Int.Cl. H04N5/232(2006.01)i, G03B7/091(2006.01)i, G03B15/00(2006.01)i, H04N5/235(2006.01)i

According to International Patent Classification (IPC) or to both national classification and IPC

**B. FIELDS SEARCHED**

Minimum documentation searched (classification system followed by classification symbols)
Int.Cl. H04N5/232, G03B7/091, G03B15/00, H04N5/235

Documentation searched other than minimum documentation to the extent that such documents are included in the fields searched
Published examined utility model applications of Japan 1922–1996
Published unexamined utility model applications of Japan 1971–2019
Registered utility model specifications of Japan 1996–2019
Published registered utility model applications of Japan 1994–2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-224025 A (KEYENCE CORP.) 21 December 2017, paragraphs [0278]-[0327] (Family: none) | 1-3,7-9 |
| Y | | 4-6 |
| Y | JP 2016-537912 A (INTEL CORPORATION) 01 December 2016, paragraphs [0095]-[0110] & US 2015/0178592 A1, paragraphs [0087]-[0099] & WO 2015/065386 A1 & CN 105580051 A | 4-7 |

☒ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 July 2019 (05.07.2019) | 30 July 2019 (30.07.2019) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2019/018270

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2018-5574 A (CANON INC.) 11 January 2018, paragraph [0039] (Family: none) | 5,7 |
| Y | JP 2018-88233 A (RICOH CO., LTD.) 07 June 2018, paragraph [0093] & US 2018/0144499 A1, paragraph [0126] | 5,7 |
| Y | JP 2008-191816 A (SONY CORP.) 21 August 2008, paragraph [0022] & US 2008/0187186 A1, paragraph [0033] & CN 101236602 A | 6-7 |
| Y | US 2014/0148690 A1 (SAMSUNG ELECTRONICS CO., LTD.) 29 May 2014, paragraphs [0082]-[0083] & EP 2736015 A1 & KR 10-2014-0067526 A & CN 103839251 A | 6-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5829679 B

- JP 4921204 B

**Non-patent literature cited in the description**

- **TAKIO KURITA.** Statistical Method for Face Detection/Face Recognition. *Neuroscience Research Institute, National Institute of Advanced Industrial Science and Technology*

- Recognition of Cracks in Concrete Structures Using Gabor Function. *Fuzzy System Symposium*
- Research on Blurred Region Detection Using Gabor Filter. *22th Symposium on Sensing via Image Information,* June 2015